# EUROPEAN PATENT SPECIFICATION

(11) **EP 2 953 478 B1**
(45) Date of publication and mention of the grant of the patent: **25.09.2019**
(21) Application number: 14707838.0
(22) Date of filing: 03.02.2014
(51) Int. Cl.: A23K 10/37, A23K 10/30, A23K 20/158, A23K 50/80, A01K 61/10

(54) **PRODUCTION METHOD OF FISH FEED ENRICHED WITH POLAR LIPIDS AND METHOD TO ENRICH FARMED FISHES**
VERFAHREN ZUR HERSTELLUNG VON MIT POLAREN LIPIDEN ANGEREICHERTEM FISCHFUTTER UND VERFAHREN ZUR ANREICHERUNG VON ZUCHTFISCHEN
PROCÉDÉ DE PRODUCTION DE NOURRITURE DE POISSON ENRICHIE EN LIPIDES POLAIRES ET PROCÉDÉ POUR ENRICHIR DES POISSONS D'ÉLEVAGE

(30) Priority: 05.02.2013 GR 20130100063; 05.02.2013 GR 20130100064
(43) Date of publication of application: 16.12.2015
(73) Proprietor: Nireus Aquaculture S.A, 19400 Koropi-Attica (GR); Demopoulos, Constantinos, 11364 Athens (GR); Antonopoulou, Smaragdi, 15234 Chalandri (GR); Zabetakis, Ioannis, 14342 Nea Philadephia (GR)
(72) Inventor: DEMOPOULOS, Constantinos, GR-11364 Athens (GR); ANTONOPOULOU, Smaragdi, GR-15234 Chalandri (GR); ZABETAKIS, Ioannis, GR-14342 Nea Philadephia (GR); PAPAHARISIS, Leonidas, GR-14564 Kifissia (GR)
(74) Representative: Samuelides, Emmanuel
(86) International application number: PCT/IB2014/058759
(87) International publication number: WO 2014/122571

(56) References cited:
- AU-A8- 2012 100 994
- CONSTANTINA NASOPOULOU ET AL: "Effects of olive pomace and olive pomace oil on growth performance, fatty acid composition and cardio protective properties of gilthead sea bream (Sparus aurata) and sea bass (Dicentrarchus labrax)", FOOD CHEMISTRY, ELSEVIER LTD, NL, vol. 129, no. 3, 19 May 2011 (2011-05-19), pages 1108-1113, XP028099698, ISSN: 0308-8146, DOI: 10.1016/J.FOODCHEM.2011.05.086 [retrieved on 2011-05-25] cited in the application
- CONSTANTINA NASOPOULOU ET AL: "Fish polar lipids retard atherosclerosis in rabbits by down-regulating PAF biosynthesis and up-regulating PAF catabolism", LIPIDS IN HEALTH AND DISEASE, BIOMED CENTRAL, LONDON, GB, vol. 10, no. 1, 16 November 2011 (2011-11-16), page 213, XP021112072, ISSN: 1476-511X, DOI: 10.1186/1476-511X-10-213
- NASOPOULOU ET AL: "Comparison of antiatherogenic properties of lipids obtained from wild and cultured sea bass (Dicentrarchus labrax) and gilthead sea bream (Sparus aurata)", FOOD CHEMISTRY, ELSEVIER LTD, NL, vol. 100, no. 2, 3 July 2006 (2006-07-03), pages 560-567, XP005852234, ISSN: 0308-8146, DOI: 10.1016/J.FOODCHEM.2005.09.074
- HARALABOS C. KARANTONIS ET AL: "BIOACTIVE POLAR LIPIDS IN OLIVE OIL, POMACE AND WASTE BYPRODUCTS", JOURNAL OF FOOD BIOCHEMISTRY, vol. 32, no. 4, 1 August 2008 (2008-08-01) , pages 443-459, XP055121895, ISSN: 0145-8884, DOI: 10.1111/j.1745-4514.2008.00160.x
- BALLESTRAZZI R ET AL: "Growth, body composition and nutrient retention efficiency of growing sea bass (Dicentrarchus labrax L.) fed fish oil or fatty acid Ca salts", AQUACULTURE, AMSTERDAM, NL, vol. 139, no. 1-2, 1 January 1996 (1996-01-01), pages 101-108, XP002238413, DOI: 10.1016/0044-8486(95)01146-3
- ERDAL YILMAZ ET AL: "EFFECT OF DIETARY OLIVE POMACE OIL AND L-CARNITINE ON GROWTH AND CHEMICAL COMPOSITION OF AFRICAN CATFISH, CLARIAS GARIEPINUS (BURCHELL, 1822)", THE ISRAELI JOURNAL OF AQUACULTURE - BAMIDGEH, 1 January 2004 (2004-01-01), pages 14-21, XP055121974,
- FERNANDEZ-NAVARRO ET AL: "Maslinic acid as a feed additive to stimulate growth and hepatic protein-turnover rates in rainbow trout (Onchorhynchus mykiss)", COMPARATIVE BIOCHEMISTRY AND PHYSIOLOGY PART C: TOXICOLOGY & PHARMACOLOGY, ELSEVIER, US, vol. 144, no. 2, 1 October 2006 (2006-10-01), pages 130-140, XP005718625, ISSN: 1532-0456, DOI: 10.1016/J.CBPC.2006.07.006
- BENEDETTO SICURO ET AL: "The olive oil by-product in 'rainbow trout Onchorynchus mykyss (Walbaum)' farming: productive results and quality of the product", AQUACULTURE RESEARCH, 1 April 2010 (2010-04-01), pages no-no, XP055121976, ISSN: 1355-557X, DOI: 10.1111/j.1365-2109.2010.02514.x
- NASSER A. AL-ASGAH, E.M. YOUNIS, A.A. ABDEL-WARITH, A.A. EL-KHALDY AND AMANAT ALI: "Effect of Feeding Olive Waste on Growth Performance and Muscle Composition of Nile Tilapia (Oreochromis niloticus)", INTERNATIONAL JOURNAL OF AGRICULTURE & BIOLOGY, vol. 13, no. 2, 1 January 2011 (2011-01-01), pages 239-244, XP008169984, ISSN: 1560-8530
- GÜLSÜN ÖZYURT ET AL: "Amino acid and fatty acid composition of wild sea bass (Dicentrarchus labrax): a seasonal differentiation", EUROPEAN FOOD RESEARCH AND TECHNOLOGY ; ZEITSCHRIFT FÜR LEBENSMITTELUNTERSUCHUNG UND -FORSCHUNG A, SPRINGER, BERLIN, DE, vol. 222, no. 3-4, 1 February 2006 (2006-02-01), pages 316-320, XP019328287, ISSN: 1438-2385, DOI: 10.1007/S00217-005-0040-Z
- BIROL BAKI ET AL: "Comparison of Food, Amino Acid and Fatty Acid Compositions of wild and cultivated Sea Bass (Dicentrarchus labrax L., 1758)", TURKISH JOURNAL OF FISHERIES AND AQUATIC SCIENCES, vol. 15, no. 1, 31 March 2015 (2015-03-31) , pages 175-179, XP055451089, ISSN: 1303-2712, DOI: 10.4194/1303-2712-v15_1_19
- N. KABA ET AL: "Comparative analysis of nutritive composition, fatty acids, amino acids and vitamin contents of wild and cultured gilthead seabream (Sparus aurata L.,1758).", JOURNAL OF ANIMAL AND VETERINARY ADVANCES, vol. 8, no. 3, 1 January 2009 (2009-01-01) , pages 541-544, XP055450776, PK ISSN: 1680-5593
- NASOPOULOU C. ET AL.: "Effects of olive pomace and olive pomace oil on growth performance, fatty acid composition and cardio protective properties of gilthead seabream (Sparus aurata) and seabass (Dicentrarchus labrax", FOOD CHEMISTRY, vol. 129, 2011, pages 1108-1113,
- "Sea bass", Wikipedia , 6 March 2014 (2014-03-06), Retrieved from the Internet: URL:https://en.wikipedia.org/wiki/Sea_bass [retrieved on 2018-02-14]

## Description

The present invention relates to the production of fish feed with olive ingredients intended for farmed freshwater and saltwater fish and the aquaculturing of freshwater and saltwater fish which are fortified or enriched through their feeding with ingredients derived from olive processing byproducts and is defined by the claims. In particular the invention relates to fishes of the families of *Sparidae,* such as gilthead sea bream - binomial name: *Sparus aurata* - and *Moronidae,* such as sea bass - binomial name: *Dicentrarchus labrax.*

The modern nutritional needs of consumers have dramatically changed because of the different diet followed in relation to previous decades. The frequent consumption of large quantities of animal proteins and fats is one of the main causes for a number of pathological conditions in humans. One of the most significant effects of diet and modern lifestyle is atherogenesis, that is, the formation of atheromatous plaque inside the arteries, which impedes blood circulation and significantly increases the risk of heart attack and stroke. Particular attention in consumer habits and adoption of particular diets, such as Mediterranean diet, and feeds, which have demonstrably shown that they can mitigate the effects of modern lifestyle, are sought by scientists of human health.

Fish catches are part of the Mediterranean diet and alongside a diet whose positive effects have been recognized for a number of important human functions. However, a characteristic of farmed fish is the higher fat content relative to corresponding fish catches from fishing. To date, there have been few attempts to include products from olive processing in fish feeds and test them in fish farming - see for example Nasopoulou C. et al. (2011). Effects of olive pomace and olive pomace oil on growth performance, fatty acid composition and cardio protective properties of gilthead seabream (Sparus aurata) and seabass (Dicentrarchus labrax). Food Chemistry 129, 1108-1113*.* A motive for introducing olive byproducts to fish feed is financial because of the low cost of acquisition of products from olive processing. Particular interest has been shown in the exploitation/use of olive pomace oil mainly as an energy source suitable for fish growth. However, up to date there were cases, where the use of olive pomace resulted in the slow growth of fish, probably due to high fiber content and eventually leading to serious nutritional intestinal problems and increased fish mortality.

An object of the present invention is a fish feed and a method of fish feeding, which when applied to fish farming, it results in fishes - that prohibit the formation of atheromatous plaque in human arteries.

The fish feed according to the invention contains olive kernel, including polar lipids with anti-Platelet Activating Factor action. The weight content of the olive kernel in the fish feed being in a range from 3.1 % to 7.7 % of the weight of the fish feed.

According to the method of production according to the invention, the olive kernel is mixed with vegetable meals and/or animal meals. The weight of the olive kernel is in the range from 3.1 grams to 7.7 grams per 100 grams of fish feed.

According to method of the invention fishes from the family of Sparidea or the family of Moronidae are enriched with polar lipids obtained from olive products by feeding the fishes with fish feed and comprising olive kernel.

The olive kernel that is used has humidity ranging from 2% to 40%, preferably from 6% to 15%. The olive kernel is the sole substance in the fish feed, which originates from olives is the fish feed and enriches the fish feed with caprylic acid, palmitic acid, palmitoleic acid, stearic acid, linoleic acid and linolenic acid ω3.

Fishes from the family of Sparidea or the family of Moronidae produced in accordance with the method of the invention contain in their flesh biologically active polar lipids from olive kernel that act as Platelet Activating Factor inhibitors or agonists. Such fishes prevent the formation of atherosclerotic lesions in *in vivo* experiments with rabbits.

The successful farming of freshwater and saltwater fish uses artificial fish feeds than contains olive kernel. Such a fish feed and such a method results in the fortification of the flesh of the fishes with the polar lipids that prohibit the formation of atherogenesis. The farming is successful because it ensures the good growth of fish without jeopardizing their health and with similar or better growth rates with fishes of the same generation fed alongside with commercial artificial fish feeds. The fortification of fish flesh was confirmed by biochemical measurements.

Olive kernel is the by-product obtained during olive oil production and it is not part of the regular diet of aquacultured fish of both salty and sweet waters. Up to date, the use of olive kernel in fish seed has not been considered. A factor that discourages the use of olive kernel could be the high percentages of anti-nutritional factors, such as fibres that they include. Feeding fishes with the fish feed, according to the invention, fortify the final products with lipids derived from olives in such a way that the final combination has proliferative efficacy. The fishes that are farmed with feed containing olive kernel results in a novel aliment with higher concentrations of polar lipids with anti-Platelet Activating Factor (anti-PAF) activity. The supplied fortification of the fish flesh with the aforementioned polar lipids renders the fish a suitable aliment for the protection against atherogenesis, the formation of atheromatous plaque in human arteries, in the context of a balanced diet.

Through the dietary enrichment in accordance with the invention, the aquacultured fish species have been enriched with biologically active lipids of olive origin. The polar lipids of these novel fishes inhibited atherosclerosis when they were dietary supplemented to hypercholesterolemic rabbits, suggesting that these novel fishes have substantial cardioprotective activities, underlining the protective effect of olive kernel enrichment of the fish feeds against cardiovascular diseases. These lipid constituents contained biological active lipids - derived from by-products of olive oil production with specific procedures - which have been structurally elucidated.

The combination of the lipid biological activity of fish and olive results in a functional food with enriched/reinforced biological activity of fish polar lipids and thus improved protective action against atherogenesis and cardiovascular diseases.

Particular effects of the novel fish feed and the method of fish feed have been recorded when they are applied to the farming of fishes of the families of
✔ Sparidae, such as gilthead seabream - *binomial name: Sparus aurata* - and
✔ Moronidae, such as seabass - *binomial name: Dicentrarchus labrax.*

Embodiments of the invention are described below with reference to **Figures 1 to 6****,** whereby:
**Figure 1** is a schematic diagram of the separation of total lipids (TL) to total polar lipids (TPL) and total neutral lipids (TNL) in the food matrixes used in the current invention.
**Figures 2A, 2B and 2C** show representative chromatographs by normal-phase HPLC separation of polar lipid fractions obtained from A: OK, B: Conventional fish feed (FO_{feed}) and C: enriched fish feed (OK_{feed}) (the analysis has been carried on NH₂ column with UV detection at 208 nm, a flow rate of 3 mL min⁻¹ and the elution solvent system as described in Nasopoulou et al 2013, Marine Drugs).
**Figure 3** illustrates the two groups of New Zealand male rabbits that were used in the in vivo experiment.
**Figure 4** is a bar chart of the biochemical data at the beginning of the experiment (t=0), (blue bars = group A rabbits and yellow bars = group B rabbits).
**Figure 5** is a bar chart of the biochemical data at the end of the experiment (t=45 days), (blue bars = group A rabbits and yellow bars = group B rabbits).
**Figure 6** are indicative microscopic photographs showing the thickness of the atherosclerotic lesion in endothelium (left: group A rabbits and right: group B rabbits).

### PRODUCTION OF OLIVE KERNEL

Olive kernel is a byproduct of olive oil production; it is available by two different processes.

According to one alternative the olive kernel is produced in olive oil mills during olive processing for the extraction of olive oil. The collection of olive oil, in the vast majority of olive mills, is carried out with centrifugation in centrifuge two- or three-phase separators. The two-phase separator produces olive pomace with 64% - 68% humidity, while the three-phase one produces olive pomace with 48% - 54% humidity. In both cases, olive pomace still contains olive oil in the order of 8% - 12% (dry basis), which was not obtained by the centrifugation process. Olive kernel is obtained from a further processing of the olive pomace that liquids and leaves are separated and the solid part of the material is kept.

With the other alternative the olive kernel is obtained in the olive pomace oil plant. Consecutively, the olive pomace is transferred to olive pomace-oil plants for the residual olive oil to be collected (raw - crude olive-pomace oil) by the extraction method. In the drying chambers of olive pomace-oil plants the olive pomace is dried so as to reduce its humidity to 8% - 10%. Drying is carried out in desiccators (rotary ovens) wherein, with the aid of metal impellers it «weaves» and comes in direct contact with a hot air stream produced by the mixing of exhaust gases of exhausted olive cake combustion furnace with ambient air. The final products of this process are olive pomace oil and olive kernel.

The data of the qualitative analysis of olive kernel obtained from the previously described processes are given in **Tables 1 and 2.** The complete fatty acid profile of olive kernel is presented in **Table 3.**

The data referring to industrial processes may vary in a range ±10% due to deviations in industrial manufacturing and limited accuracy of weighing and mixing equipment.

| **TABLE 1:** OLIVE KERNEL FROM OILVE OIL PLANTS: QUALITATIVE ANALYSIS | |
|---|---|
| Total Energy (kcal/100grams) | 381.5 |
| Total Energy (kJ/100grams) | 1,596.6 |
| Lipids (grams / 100grams of dry weight) | 14.7 |
| Saturated fatty acids (% of total fatty acids) | 15.5 |
| Mono-unsaturated fatty acids (% of total fatty acids) | 75.6 |
| Poly-unsatuted fatty acids (% of total fatty acids) | 8.9 |
| Proteins (grams / 100grams of dry weight) | 9.2 |
| Humidity (grams / 1 00grams of dry weight) | 6.1 |
| Ash (grams / 100grams of dry weight) | 16.9 |
| Fibre (grams / 100grams of dry weight) | 37.3 |

| **TABLE 2:** OLIVE KERNELFROM OLIVE POMACE OIL PLANTS: QUALITATIVE ANALYSIS | | |
|---|---|---|
| HUMIDITY 105 °C minimum | % | 2-40 |
| TOTAL PROTEINS | % | 6-15 |
| TOTAL LIPIDS | % | 3-10 |
| RAW FIBERS | % | 30-70 |
| TOTAL ASH | % | 3-8 |
| TOTAL CALCIUM Ca | mgrams/100grams | 100 -700 |
| TOTAL IRON Fe | mgrams/100grams | 10-200 |

| **TABLE 3:** OLIVE KERNEL FATTY ACID PROFILE in grams per 100 grams fat | | |
|---|---|---|
| CAPRYLIC ACID | C8:0 | 0.05-0.50 |
| MYRISTIC ACID | C14:0 | 0.03-0.50 |
| PALMITIC ACID | C16:0 | 3-23 |
| PALMITOLEIC ACID | C16:1 | 0.20-4 |
| STEARIC ACID | C18:0 | 2-9 |
| OLEIC ACID | C18:1 | 20-150 |
| LINOLEIC ACID | C18:2 | 5-20 |
| LINOLENIC ACID | C18:3 | 0.02-4 |
| ARACHIDIC ACID | C20:0 | 00.02-5 |
| EICOSENIC ACID | C20:1 | 0.02-5 |
| BEHENIC ACID | C22:0 | 0.02-5 |
| KETOLEIC ACID | C22:1 | 0.02-5 |

### FISH FEED PRODUCTION WITH OLIVE POMACE

Fish feed production with the addition of olive kernel begins with the preparation of its formula. Depending on the fish species for which the fish feed is intended, olive kernel participates to it in ratios ranging from 3.5 to 7.0 grams of olive kernel per 100 grams fish feed (3.1 grams to 7.7 grams of olive kernel per 100 grams fish feed taking into account the deviations in industrial manufacturing). **Tables 4 and 5** present indicative composition of fish feeds enriched with olive kernel that are used as finishing diets, usually during the last 2-3 months of fish farming) for gilthead sea bream and for sea bass, respectively.

In each case, the purpose of preparing the formula is the fortification of feed with active elements derived from olive kernel. Verification of the fish feed fortification is done by a chemical method for determining the fatty acid profile of feeds, total lipids and individual polar and neutral lipids. Further, verification of the fish feed is effected in vitro bioassays that use washed rabbit platelets and the platelet's aggregation is monitored in an aggregometer.

| **TABLE 4:** INDICATIVE FISHFEED COMPOSITION WITH OLIVE KERNEL IN KILOGRAMS/100 KILOGRAMS FOR FINAL GILTHEAD SEABREAM FATTENING | |
|---|---|
| SOFT WHEAT | 9.5 |
| CORN GLUTEN | 15.5 |
| THERMALLY PROCESSED SOY FLOUR | 22.0 |
| HEMOGLOBIN | 7.0 |
| FISHMEAL | 22.0 |
| OLIVE KERNEL | 7.0 |
| FISH OIL | 16.0 |
| PHOSPHORUS BALANCER | 0.4 |
| CALCIUM BALANCER | 0.1 |
| VITAMIS - TRACE ELEMENTS PRE-MIXTURE | 0.5 |
| TOTAL | 100.0 |

| **TABLE 5:** INDICATIVE FISHFEED COMPOSITION WITH OLIVE KERNEL IN KILOGRAMS/100 KILOGRAMS FOR FINAL SEA BASS FATTENING | |
|---|---|
| SOFT WHEAT | 10.0 |
| CORN GLUTEN | 15.4 |
| THERMALLY PROCESSED SOY FLOUR | 21.0 |
| HEMOGLOBIN | 7.0 |
| FISHMEAL | 25.0 |
| OLIVE KERNEL | 3.5 |
| FISH OIL | 17.0 |
| PHOSPHORUS BALANCER | 0.4 |
| CALCIUM BALANCER | 0.2 |
| VITAMINS - TRACE ELEMENTS PRE-MIXTURE | 0.5 |
| TOTAL | 100.0 |

Fish feed production with the addition of olive kernel is carried out through the extrusion process. Feed processing is done in an extrusion machine with two screws (twin screw extruder) with density control at 670 kgrams/m³ (density control) and control of the delivered mechanical energy which comes up to 24 Wh/Kgram, gives the right feed kneading and cooking and the right physical and nutritional properties.

During these processes, preparation and mixing of materials is initially carried out, followed by cooking with the addition of water and steam, agglutination and shaping of feed whether by the extrusion procedure or with that of pelletization, feed shaping, drying, cooling and packaging. Following are briefly the stages of fish feed production. Slight variations in production conditions as in formulas may exist depending on the particularities of the farmed fish species:
1. Receipt and storage of raw materials
2. Dosing weighing of every raw material in dry form, according to formula. Examples of formulae are shown in **Tables 3 & 4.**
3. Pre-mixing and fine grinding of raw materials in size of less than 1 millimeter
4. Full mixing of raw materials to produce a mixture
5. Setting the temperature of the mixture at 95 °C (°C denotes grad Celsius) and humidity at 30% of the mixture, by adding 21% water and 7% steam, for the formation of the mixture into paste.
6. Agglutination and formation of feed by an extrusion process (extrusion) exposing the paste in conditions of progressive temperature increase up to a maximum of 120 °C), and pressure - maximum applied pressure is 200 bar - for 40 to 60 seconds in extrusion cylinder (extruder).
7. Extrusion of paste from the pressure cylinder through a calibrated die at desired diameter
8. Cutting of the paste to the desired length
9. Sieving
10. Drying (to adjust the desired humidity)
11. Addition of fat/oil, for example fish oil, in vacuum conditions, according to formula. Examples of formulae are given in **Tables** 3 & 4.
12. Cooling the product to ambient temperature
13. Final sieving
14. Packaging and storage.

Examples of specifications of fish feeds enriched with olive kernel used for gilthead sea bream and sea bass are given in **Tables 6a and 6b,** respectively.

| **TABLE 6a:** FISH FEED SPECIFICATIONS WITH OLIVE KERNEL FOR GILTHEAD SEABREAM | | |
|---|---|---|
| HUMIDITY 105 °C max. | % | 10.00 |
| Minimum % participation of Protein on total Proteins in feed | % | 30 |
| Ratio % of animal(Marine + Terrestrial) Protein over total Proteins in feed | % / % | 40/60 |
| Raw Fibers max. | % | 5.0 |
| Total Ash max. | % | 9.00 |
| Olive Kernel Participation | % | 7.00 |
| Total Fish Feed Energy | Mj/kgrams | 19.5 |
| Digestable Fish Feed Energy | Mj/kgrams | 17.50 |
| Digestable protein / Digestable Energy Ratio | grams/Mj | 21-24 |

| **TABLE 6b:** FISHFEED SPECIFICATIONS WITH OLIVE KERNEL FOR SEA BASS | | |
|---|---|---|
| HUMIDITY 105 °C max. | % | 10.00 |
| Minimum % participation of Protein on total Proteins in feed | % | 35 |
| Ratio% animal(Marine + Terrestrial) Protein on total Proteins in feed | % % | 50/50 |
| Raw Fibers max. | % | 3.5 |
| Total Ash max. | % | 9.00 |
| Olive kernel Participation | % | 3.5 |
| Total Fish Feed Energy | Mj/kgrams | 21.5 |
| Digestable Fish Feed Energy | Mj/kgrams | 18.50 |
| Digestable protein / Digestable Energy Ratio | grams/Mj | 19-24 |

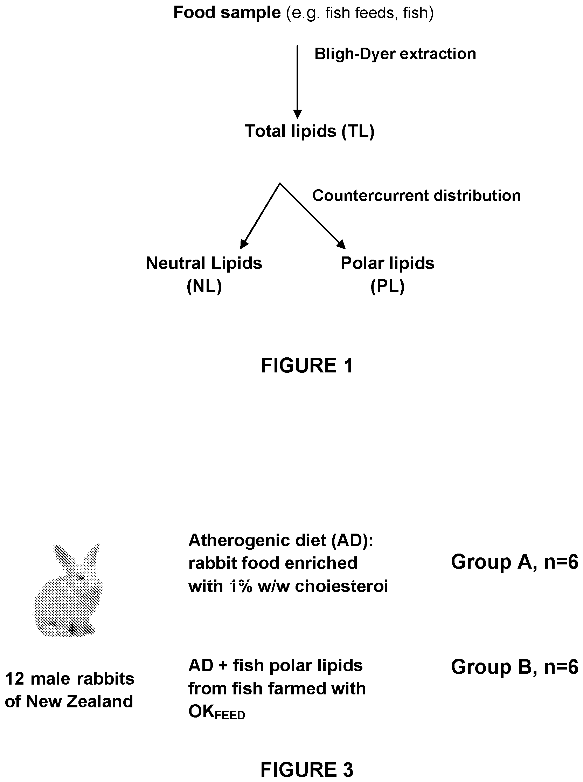

The ingredients of interest for the fortification/enrichment of fish feeds are the polar lipids with anti-PAF activity that they contain. **Table 7** below shows indicative examples of the concentrations of the aforementioned polar lipids in conventional feeds or feeds before their fortification/enrichment with olive kernel and those that have been fortified with olive kernel. **Figure 1** depicts the experimental procedure of separating polar and neutral lipids.

| **TABLE 7.** POLAR LIPID CONCENTRATION AFTER FEED FORTIFICATION | | |
|---|---|---|
| | CONVENTIONAL FEED | FORTIFIED FEED |
| Polar Lipids (PL) grams per 100 grams of fish feed | 0.76^{a} | 1.3^{b} |
| Values in the same line accompanied, as a superscript, by a different letter have a statistical significant difference from one another (p-value<0.05, i.e. confidence levels of 95%). | | |

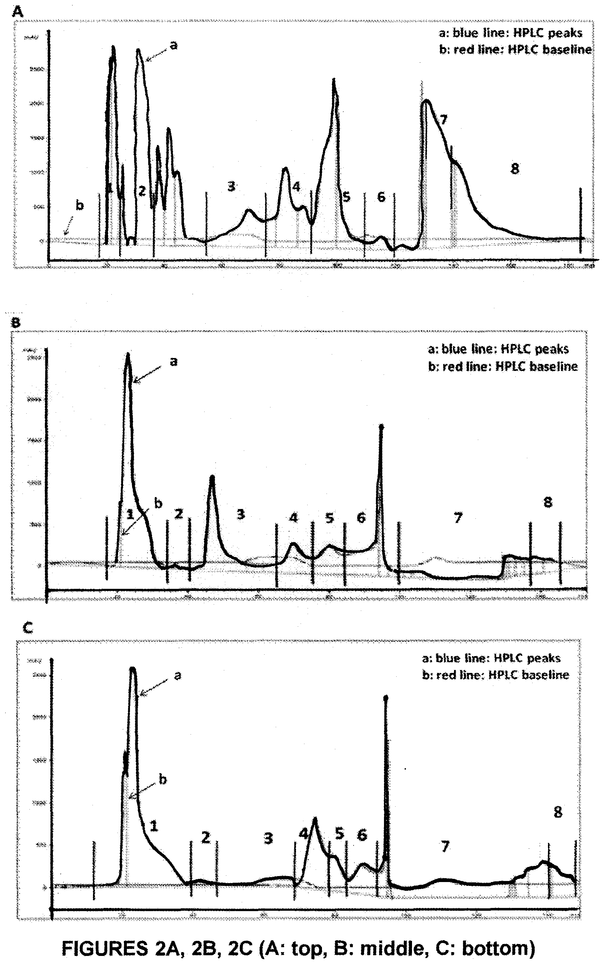

The TPL of olive kernel, conventional fish feed (FO_{feed}) and the fortified feed (OK_{feed}) have been separated by High Performance Liquid Chromatography and typical chromatograms of these 3 samples are presented in **Figure 2****,** below (olive kernel in **Fig. 2A****,** FO_{feed} in **Fig. 2B** and OK_{feed} in **Fig. 2C**).

In parallel, the biological activity of fractions (see **Figure 2** above) of total polar lipids (Total Polar Lipids, TPL) of the oil kernel (OK), the conventional fish feed (FO_{feed}) and the fortified feed (OK_{feed}) is assessed and presented in Table 8; these data are given as peq PAF/grams.

In the case of a compound acting as PAF agonist, the biological activity is measured by calculating the aggregation (measured as distance, in cm) in an aggregometer that the specific analyte causes and it is expressed as peq PAF that causes equal (in cm) aggregation per gram of the analyte. In the latter case, i.e. of a compound acting as PAF inhibitor, the biological activity is measured by the inhibition that the analyte causes to platelets' aggregation induced by PAF and is expressed as % of inhibition per gram of analyte. In both cases, the higher the values, the better the biological activity.

In **Table 8,** the weak agonists are given as quantity of PAF (peq PAF) that causes the same platelets' aggregation as the analyte. The quantity of the analyte is expressed as quantity of the initial sample (in grams) that has been separated by HPLC. In **Table 8,** the same amounts of each fraction (i.e. either OK or FO_{feed} or OK_{feed}) are compared. From **Table 8,** it can be deduced that by comparing the most biologically active HPLC fractions that have been derived from either OK, or FO_{feed} or OK_{feed}, the fractions of OK and OK_{feed} have shown increased/enriched biological action to act as weak PAF agonists as opposed to the corresponding fractions of FO_{feed}.

| **TABLE 8**. BIOLOGICAL ACTIVITY OF TPL FRACTIONS | | | |
|---|---|---|---|
| FRACTIONS | OK | FO_{feed} | OK_{feed} |
| 5 | 1.01 ± 0.05^{a} | 0. 04 ± 0.01^{†} | 1.24 ± 0.07^{†} |
| 6 | 0.43 ± 0.02 | n.d.^{b} | 0.56 ± 0.02 |
| 7 | 2.34 ± 0.12 | n.d. | n.d. |
| a : Average of three measurements ± standard deviation; b : No biological activity detected; †: Statistically important difference between FO and OK diet, according to Wilcoxon test | | | |

### FARMING IMPLEMENTATION

Briefly, the fish production stages in aquaculture are the following:
1. Selection of fish to be fortified.
2. Adaptation of fish to the new feed.
3. Gradual feeding of fish with daily amounts divided in 2 or more meals.
4. Periodic (monthly) control of fish growth with weight sampling.
5. Frequent collection of mortalities (dead fish).
6. Catching of fish close to marketable size - check for flesh fortification progress.
7. Fish catching.

### Gilthead sea bream

For gilthead sea bream the initial dietary intervention was conducted in terrestrial tanks as well as in floating cages in the sea with the same specifications, i.e. feeding formula, farming period. In both cases, i.e. in land and in water, the results were the same. Below is a description of farming in terrestrial tanks.

Gilthead sea breams with initial average weight of 280grams fed so far with common artificial fish feed were placed in 15 m³ tanks with initial fish stocking density 7 kgrams/m³ and final 12.5 kgrams/m³. Until the fortification/enrichment phase the fishes were fed with common fish feed. The water temperature during the experiment ranged from 19 °C up to 24 °C - °C denotes grad Celsius - gradually increasing from April to August. The salinity of the saltwater was 0.32% and the water was exchanged on an hourly basis. The fish were fed two meals daily, with a feeding amount 0.8% - 1.16% of their weight. Feed is given with low speed and extra caution so as to make sure that it is acceptable to the fish. After the initial stocking, sampling was conducted to control their weight in 79 days while fish catching was conducted in 117 days. Gilthead sea breams accepted their feed without particular problems and showed a very good growth rate. The Feed Conversion Rate (FCR), i.e. the mass of fish feed that is converted to fish biomass, was found equal to 1.82 and the mortality was found to be low, equal to 0.2%.

### Sea bass

Sea basses with initial average weight of 150 grams fed so far with common artificial fish feed were placed in a floating fish cage 4 m × 4 m and 3.5 m depth in seawater with salinity 0.32%. Until the fortification/enrichment phase the fishes were fed with common fish feed. The fish were fed two meals daily, with a feeding amount 0.65% - 1.59% density of their weight. Feed is given with low speed in this case also and extra caution so as to make sure that it is acceptable to the fish. After the initial stocking, sampling was conducted monthly to control weight and the completion of the nutritional intervention was 190 days after its initiation. Sea bass showed relatively less acceptance of feed in relation to gilthead sea bream and a high Feed Conversion Rate (FCR = 3.42). It also showed higher mortality of 20%. Upon completion of the experimental farming, a quality control of fats was conducted as an initial assessment of flesh fortification progress. Even the higher FCR index and the significant higher mortality compare to gilthead sea bream, the trial evaluated as positive, even compare to others that no biomass growth succeeded and higher mortalities were recorded.

**Table 9** shows the aggregated data of the fish fortification farming process carried out. Positive results in terms of Specific Growth Rate (SGR), Feed Conversion Rate (FCR) and Mortality rate, although the results of FCR and Mortality rate for the sea bass are not as good as for gilthead sea beam.

| **TABLE 9:** FARMING DATA | | |
|---|---|---|
| | Gilthead sea bream | Sea bass |
| Initial Fish Stocking Density (kgrams/m³) | 11.7 | 6.19 |
| Final Fish Stocking Density (kgrams/m³) | 20.8 | 11.50 |
| Specific Growth Rate (SGR %) | 0.57 | 0.49 |
| Feeding Rate (FR%) | 0.8-1.16 | 0.65-1.59 |
| Feed Conversion Rate (FCR) | 1.82 | 3.42 |
| Mortality rate (%) | 0.2 | 20 |
| Initial average W. (grams) | 284 | 150 |
| Final average W. (grams) | 506 | 390 |

An explanatory note in the above is that the feeding rate, as indicated in **Table 9,** depends on the fish weight and the water temperature of the fish habitat. The feed acceptance of the fish is not an automatic process. It is affected from fish physiology. Furthermore, it is affected by the feed composition and it depends on how many days it will take for the fortification to be completed.

The duration of farming for a successful fortification depends on the fish, the feed and the final result, i.e. 40- 190 days for gilthead sea bream and 90 - 250 days for sea bass. The technical result of fish fortification involves a technique in terms of the type of feed to be administered, its composition and its duration.

With the completion of the production process, a first verification was conducted for the success of flesh fortification in gilthead sea bream. This test related to the comparison of the fatty acid profile in the fish flesh at the beginning and end of the experiment. **Table 10** presents the effect of feed on the fatty acid profile in the flesh of gilthead sea bream and sea bass is displayed with the increase of monounsaturated fatty acids and the corresponding reduction of polyunsaturated fatty acids.

| **TABLE 10:** FATTY ACID PROFILE AT THE BEGINNING AND END OF FORTIFICATION | | | | |
|---|---|---|---|---|
| | Gilthead sea bream | | Sea bass | |
| | beginning | end | beginning | end |
| Palmitic C:16:0 | 6.44^{a} | 14.51^{b} | 7.2^{a} | 17.27^{b} |
| Oleic C18:1 | 16.02^{a} | 31.86^{b} | 16.85^{a} | 22.20^{b} |
| Linoleic C18:2 | 12.76 | 12.05 | 11.78 | 11.27 |
| EPA C 20:5ω3 | 10.02^{a} | 2.44^{b} | 11.56^{a} | 7.94^{b} |
| DPAC 22:5ω3 | 6.26^{a} | 1.85^{b} | 6.87^{a} | 1.10^{b} |
| DHA C 22:6ω3 | 18.74^{a} | 7.24^{b} | 19.51^{a} | 7.39^{b} |
| Saturated | 9.88^{a} | 21,90^{b} | 12.56^{a} | 26.19^{b} |
| Monounsaturated | 48.26 | 48.26 | 40.93 | 39.28 |
| Polyunsaturated | 59.65^{a} | 29.83^{b} | 51.63^{a} | 34.53^{b} |
| Values in the same line accompanied by a different letter have a difference from one another (p<0.05, i.e. confidence levels > 95%). | | | | |

### EFFECTIVENESS VERIFICATION OF THE FISH FLESH FORTIFICATION

The ingredients of interest for fish fortification and the enhancement of their action against atherogenesis are the polar lipids they contain. The analyses performed to confirm the fortification relate to the concentration of total lipids and polar lipids as well as to the biological activity of fractions of PAF agonist and PAF inhibitor. In the first case, the activity of PAF agonist is assessed by the cm of platelet aggregation. In the case of PAF inhibitor, the biological activity is assessed by the % inhibition of platelet aggregation induced by PAF. **Table 11,** below presents examples of the total polar lipids concentration per 100 grams of filet of edible fish for gilthead sea bream and sea bass species.

| **TABLE 11:** TOTAL POLAR LIPIDS CONCENTRATION AT THE BEGINNING AND END OF FORTIFICATION | | |
|---|---|---|
| | Gilthead sea bream | Sea bass |
| | PL(grams) /100 grams flesh | PL(grams) /100 grams flesh |
| Conventional | 0.51 | 0.90 |
| Fortified | 0.80 | 1.59 |

**Tables 12 and Table 13 show examples of fractions biological activity in terms of PAF agonists expressed as peq PAF/gram of initial sample before HPLC separation and** fractions biological activity in terms of PAF inhibitors expressed as % inhibition of PAF induced aggregation /gram of initial sample before HPLC separation. In Table 12, the biological activity was measured in total polar lipids obtained/extracted from the flesh of conventional (beginning) and fortified (end) fish while in Table 13, the biological activity was measured in total polar lipids obtained/extracted from the flesh of fish fed with FO_{feed} and fish fed with OK_{feed}. **Table 12** shows that the corresponding fractions of the enriched fish have shown increased biological activity as weak PAF agonists. As previously explained, PAF agonists finally act as PAF inhibitors since they compete with PAF to "occupy" the same receptor "pockets" and thus inhibiting the action of PAF and subsequently acting as anti-inflammatory agents.

| **TABLE 12:** BIOLOGICAL ACTIVITY TEST RESULTS IN GILTHEAD SEABREAM AT THE BEGINNING AND END OF FORTIFICATION | | |
|---|---|---|
| HPLC polar lipid FRACTION | Conventional (beginning) Gilthead sea bream peq PAF/grams | Fortified (end) Gilthead sea bream peq PAF/grams |
| 1 | 0.13±0.01^{a.†} | 0.30±0.01^{†} |
| 3 | 0.04±0.01 | n.d.^{b} |
| 4 | 0.11±0.01^{†} | 0.25±0.01^{†} |
| 5 | 0.11±0.01^{†} | 0.24±0.01^{†} |
| 6 | n.d. | 0.23±0.01 |
| 7 | 0.11±0.01^{†} | 0.26±0.01^{†} |
| 8 | 0.16±0.01^{†} | 0.28±0.02^{†} |
| a : Average of three measurements + S.D; b : No biological activity detected; †: Statistically important difference between before and after sea breamfortification, according to Wilcoxon test | | |

| TABLE 13: BIOLOGICAL ACTIVITY TEST RESULTS IN SEA BASS CULTURED WITH FO_{feed} AND OK_{feed} | | | | | |
|---|---|---|---|---|---|
| HPLC polar lipid fraction | Retention Time (Rₜ, min) | Fish fed with FO_{feed} | | Fish fed with OK_{feed} | |
| | | Aggregation peq PAF / grams | % Inhibition | Aggregation peq PAF / grams | % Inhibition |
| 1 | 0-4 | 0.0±0.0 | 100±8.0 | 0.0+0.0 | 100±9.1 |
| 2 | 4-5 | 0.0±0.0 | 91±7.8 | 0.0±0.0 | 80±6.7 |
| 3 | 5-12 | 0.0±0.0 | 40±3.6 | 0.0+0.0 | 27±2.2 |
| 4 | 12-18 | 0.0±0.0 | 56±4.1 | 0.0+0.0 | 73±5.7 |
| 5 | 18-28.5 | 0.0±0.0 | 56±4.6 | 0.0±0.0 | 72±5.9 |
| 6 | 28.5-39.5 | 0.0±0.0 | 68±7.3 | 0.0±0.0 | 24±3.5 |
| 7 | 39.5-47 | 0.0±0.0 | 71+7.1 | 1.3±0.3 | 0.0±0.0 |
| 8 | 47-58 | 0.0±0.0 | 35±3.1 | 0.0±0.0 | 36±2.9 |
| 9 | 58-62 | 0.0±0.0 | 32±2.8 | 6.5±2.1 | 0.0±0.0 |
| 10 | 62-68.3 | 0.0±0.0 | 56±4.8 | 0.0±0.0 | 5.0±1.2 |
| 11 | 68.3-70.9 | 0.0±0.0 | 32±2.2 | 0.0±0.0 | 70±5.3 |
| 12 | 70.9-71.3 | 0.0±0.0 | 0.0±0.0 | 0.0±0.0 | 47±3.9 |
| 13 | 71.3-75.2 | 0.0±0.0 | 17+2.2 | 0.0±0.0 | 100±8.9 |
| 14 | 75.2-77.1 | 0.0±0.0 | 66±6.9 | 0.0±0.0 | 80±7.3 |
| 15 | 77.1-78.3 | 0.0±0.0 | 93±7.9 | 2.9±0.7 | 0.0±0.0 |
| 16 | 78.3-84 | 0.0±0.0 | 97±8.2 | 0.0±0.0 | 100±9.5 |
| 17 | 84-88 | 0.0±0.0 | 100±9.3 | 10.9±1.8 | 100±9.9 |
| 18 | 88-105 | 0.0±0.0 | 100±8.7 | 0.0±0.0 | 0.0±0.0 |
| * Aggregation: peq PAF/grams of initial sample before HPLC separation | | | | | |
| ** % Inhibition: % / grams of initial sample before HPLC separation | | | | | |

From **Table 13,** it can be deduced that overall the biological activities of the HPLC fractions of the polar lipids of the enriched fish are higher/stronger than those of the corresponding HPLC fractions of the polar lipids of the conventional fish, since the inhibitory activity is higher in most of the fractions, and also in other 3 fractions, the polar lipids of the enriched fish have also aggregation activities acting as PAF agonists; as explained before, these aggregation activities are positive in terms of anti-inflammatory properties.

It was found that fishes that are fed with a fish feed containing olive kernel are fortified with desirable nutrients. The concentrations, especially these of polar lipids, are thereby significantly increased in fish flesh and it is possible to become functional aliments for the protection against atherogenesis (two columns on the right at Table 13, above). The method of feeding depends on the fish species. Examples of test results with gilthead sea bream (*Sparus aurata*) of Sparidae family and sea bass (*Dicentrarchus labrax*) of Moronidae family illustrated the advantages of fish feed including dry olive kernel. The same methodology to enrich fish flesh with polar lipids is used in case of fresh water species, with adaptations in feed formulation and breading techniques. Fishes enriched with polar lipids of olive kernel are excellent for prohibiting atherogenesis.

To invention allows the incorporation of olive kernel in fish feeds without presenting important growth problems. For a highly advantageous fortification of fish flesh with polar lipids the combination of the maximum permissible participation in rations, the content of dry olive kernel in the fish feed, the daily feed intake by fish and the period this nutritional intervention should last are selected according to the fish species. Due to the fact that the specific feed is given only at the final stage of fish growth and for a specific time period, the fortification period varies depending on the fish species and the fish feed composition. In each case, an adjustment period is required.

### IN VIVO EXPERIMENTS WITH SEA BREAM FED WITH OK_{FEED}

With experiments we have concluded that by studying rabbits fed with atherogenic diet (i.e. rabbit food supplemented with 1% weight/weight cholesterol) for 45 days supplemented with the total polar lipids of fish farmed using OK_{feed}, the formation of atherosclerotic lesions has been reduced as opposed to rabbits fed with only atherogenic diet (i.e. rabbit food supplemented with 1% weight/weight cholesterol). These experiments are explained below.

In an *in vivo* experiment the TPL obtained from the sea bream fed with OK_{feed} have been fed to rabbits and their effects on the development of heart disease, by measuring the thickness of atheromatic lesion, have been studied.

In brief, following the experimental extraction procedure as outlined in **Figure 1** above, 12.3 kgrams of sea bream lean fillets fed with OK_{feed} have been used and the total lipids (TL) have been extracted using the Bligh-Dyer method. TL have been further separated to Total Polar Lipids (TPL) and Total Neutral Lipids (TNL) by counter-current distribution (see **Figure 1****,** above).

97.6 grams of TPL have been obtained and during the *in vivo* experiment 0.48 grams have been supplemented to each rabbit on a daily basis; the scientific concept behind these quantities is based on the fact that 0.48 grams of TPL are equivalent to 60 grams of fish fillet per day per rabbit.

12 male healthy New Zealand rabbits have been used. The animals were kept in special inox cages under constant temperature (19 ± 1°C), relative humidity (55±5%), aeration (12 complete changes of air per hour) and ratio of light/darkness (12h/12h). The *in vivo* experiment was performed under the legal requirements of EC 609/86is at the laboratory in the Medical School of the University of Athens.

The animals used in the *in vivo* experiment are male New Zealand rabbits since the metabolism of these animals is as close as possible to human metabolism. For instance, rabbit lipoproteins containing apo-lipoprotein B (apo-B) are similar to the human ones. Also, rabbit's liver as well as human's liver produce Very Low Density Lipoproteins (VLDL) that contain apo-B100. Finally, Cholesterol Ester Transfer Proteins (CETP) are in abundance both in rabbits and humans. Because of the high levels of CETP, these animals are capable to develop atherosclerotic lesions in just 6 weeks when fed with appropriate atherogenic diet (i.e. rabbit food enriched with 1% weight/weight cholesterol).

In the *in vivo* experiment of the present invention, the rabbits have been separated into 2 groups as shown in **Figure 3****.**

### Biochemical characteristics of rabbits at the beginning of the dietary intervention (t=0 days).

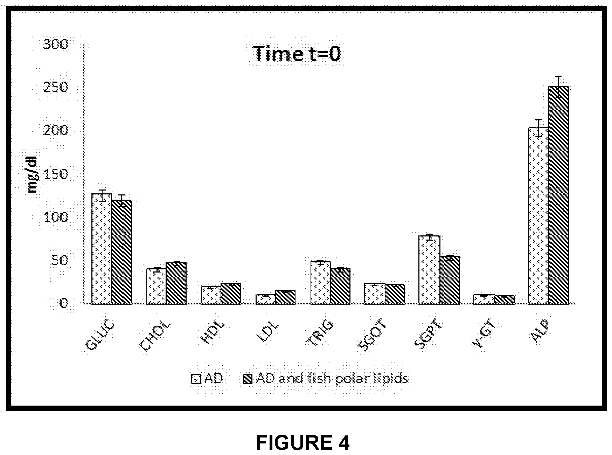

At the beginning of the experiment the following biochemical parameters have been measured: total cholesterol (CHOL), high density cholesterol (HDL), low density cholesterol (LDL), triglycerides (TRIG), glucose (GLUC), alkaline phosphatase (ALP) and also the liver enzymes SGOT, SGPT and γ-GT **(****Figure 4****).** From **Figure 4****,** it can be deduced that the biochemical blood characteristics of the rabbits of the two groups do not differ.

### Biochemical characteristics of rabbits at the end of the dietary intervention (t=45 days).

During the dietary intervention, the animals did not develop any disease (e.g. sickness, diarrhoia) that could be possibly linked to the supplementation of the total polar lipids of the sea bream fed with OK_{feed}. On the contrary, there was a preference trend from the rabbits towards the diet containing the fish total polar lipids.

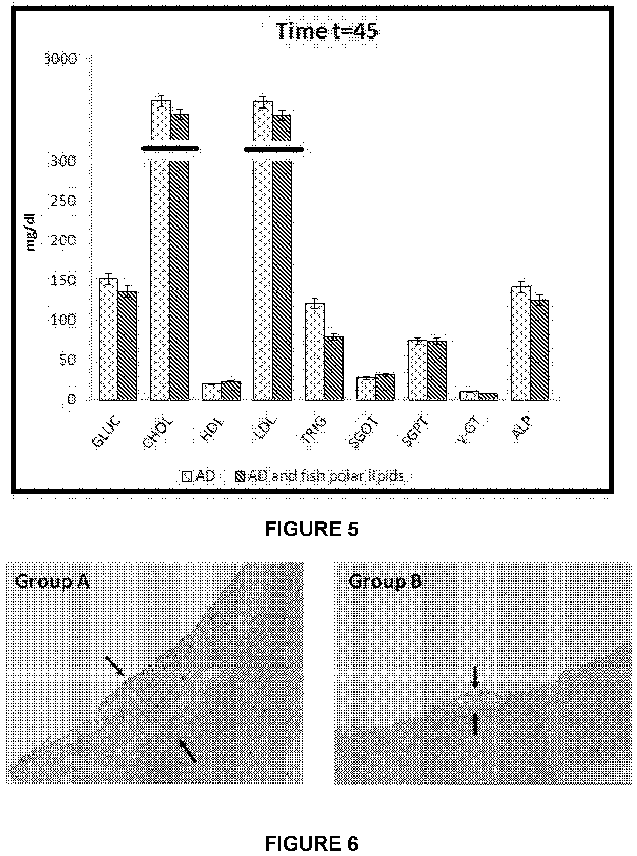

At the end of the dietary intervention, the same biochemical parameters as in time t=0 have been measured and the results are depicted in **Figure 5****.** From **Figure 5****,** it can be deduced that the biochemical parameters in both groups do not exhibit statistically significant differences.

The levels of total cholesterol and Low Density Lipoprotein have been measured at t=45 days and these results are also shown in **Figure 5****.** No statistically significant differences have been observed.

### The influence of the dietary intervention on the development of atherosclerotic lesions.

At the end of the experiment, the animals have been subjected to euthanasia and their blood arteries have been obtained. Morphometric analysis of arteries' injuries has been carried out by measuring the thickness of the atheromatic plaque (i.e. from the healthy part of the endothelium until the very edge of the foam cells); all measurements are in nm.

The consumption of total polar lipids of fish fed with OK_{feed} has benefited the animals of group B since the atherosclerotic lesions of group B have been found to be thinner by 59% when compared to the corresponding ones of group A (see **Figure 6****,** on the left an artery of group A and on the right an artery of group B).

Fishes being fed with olive kernel enriched fish feed in accordance with the present invention can *in vivo* inhibit atherosclerosis and therefore this fish has strong *in vivo* cardioprotective properties. With the present invention, the inclusion of olive kernel in aquaculture fish feeds was done in such a to balance out the negative effects on fish mortality due to the high fiber content of the olive kernel. It is noted that the data referring to industrial processes, i.e. the preparation of fish feed and the fish enrichment process, may vary in a range ±10% due to deviations in industrial manufacturing and limited accuracy of weighing and mixing equipment.

## Claims

1. Fish feed for marine and fresh water species enriched with polar lipids, the fish feed including substances originating from olives **characterized in that** the fish feed further contains olive kernel, including polar lipids with anti-Platelet Activating Factor action and the weight content of the olive kernel in the fish feed being in a range from 3.1 % to 7.7 % of the weight of the fish feed.

2. Fish feed **according to claim 1,** whereby the fish feed includes olive kernel having humidity in a range from 2% to 40%, preferably from 6% to 15%.

3. Fish feed **according to any claim 1 or claim 2,** whereby the sole substance in the fish feed, which originates from olives is the said olive kernel.

4. Fish feed **according to any one of claims 1 to 3,** whereby the fish feed includes the following fatty acids: caprylic acid, palmitic acid, palmitoleic acid, stearic acid, linoleic acid and linolenic acid

5. Fish feed **according to claim 4,** whereby the fish feed includes the following acids in grams per 100 grams fats:
• caprylic acid: 0.05 grams to 0.50 grams
• palmitic acid: 3 grams to 23 grams
• palmitoleic acid: 0.20 grams to 4 grams
• stearic acid: 2 grams to 9 grams
• linoleic acid: 5 grams to 20 grams
• linolenic acid: 0.02 grams to 4 grams

6. Fish feed **according to any one of claims 1 to 5,** whereby the fish feed includes 7 ± 10% grams of olive kernel per 100 grams of fish feed or 3.5 ± 10% grams of olive kernel per 100 grams of fish feed.

7. Method of production of fish feed, including the mixing of olive kernel with vegetable meals and/or animal meals, whereby the weight of the olive kernel is in the range from 3.1 grams to 7.7 grams per 100 grams of fish feed.

8. Method of production of fish feed **according to claim 7,** whereby the olive kernel is obtained from processing olive pomace and has the following characteristics:
• humidity from 6 % to 15 % at 105 degree Celsius,
• total nitrogenous substances, i.e. nitrogen quantity multiplied by 6.25, from 6 % to 15%,
• total fat after hydrolysis with hydrochloric acid from 3 % to 10 %,
• raw fibers from 30 % to 70 %,
• total ash from 3 % to 8 %,
• total calcium Ca from 100 mgrams to 700 mgrams per 100 grams of olive kernel,
• total iron Fe from 10 mgrams to 200 mgrams per 100 grams of olive kernel

9. Method of production of fish feed **according to claim 7 or claim 8,** whereby the maximum temperature during fish feed production is 120 degree Celsius (°C).

10. Method of production of fish feed **according to any one of claims 7 to 9,** whereby the olive kernel enriches the fish feed with polar lipids, preferably with oleic acid, linoleic acid, linolenic acid and palmitoleic acid.

11. Method of enrichment of fishes from the family of Sparidea or the family of Moronidae with polar lipids obtained from olive products by feeding the fishes with fish feed, **characterized in that** the fish feed contains 3.1 grams to 7.7 grams of olive kernel per 100 grams of fish feed.

12. Method of enrichment of fishes **according to claim 11,** whereby the method includes i) stocking the fishes in fish stocking means with a density ranging from 6.19 kg/m³ to 11.77 kg/m³, ii) the water temperature in the fish stocking means is between 19 °C and 24 °C and iv) the fishes are harvested when the density of the fishes in the fish stocking means is between 11.5 kg/m³ and 20.8 kg/m³.

13. Method of enrichment of fishes **according to claim 11 or to claim 12,** whereby the fishes are fed with fish feed twice a day and the fish feed that is provided each time to the fishes is between 0.65 % and 1.59 % of the weight of the fishes, preferably between 0.8 % and 1.16 % of the weight of the fishes.

14. Method of enrichment of fishes **according to any one of claims 11 to 13,** whereby the fishes are either gilthead sea bream or sea bass and the content of olive kernel is 7 ± 10% grams of olive kernel per 100 grams of fish feed in case the fish is gilthead sea bream and 3.5 ± 10% grams of olive kernel per 100 grams of fish feed in case the fish is sea bass.

15. Method of enrichment of fishes **according to any one of claims 11 to 14,** whereby the feeding of the fish with the said fish feed lasts 40 to 250 days.

16. Method of enrichment of fishes **according to claim 15,** whereby the feeding of the fish with the said fish feed lasts 40 to 190 days in case the fish is gilthead sea bream and 90 to 250 days in case the fish is sea bass.

17. Method of cultivating fishes from the family of Sparidea or the family of Moronidae, whereby the method includes an initial pre-growing phase and an enrichment process, and whereby the enrichment process is **according to any of the preceding claims 11 to 16.**

## Patentansprüche

1. Fischfutter für Meeres- und Süßwasserarten, die mit polaren Lipiden angereichert sind, wobei das Fischfutter Substanzen enthält, die aus Oliven stammen, **dadurch gekennzeichnet, dass** das Fischfutter weiter Olivenkern enthält, einschließlich polare Lipide mit Anti-Thrombozyten-Aktivierungsfaktor-Wirkung, und dass der Gewichtsgehalt von Olivenkern im Fischfutter in einem Bereich von 3,1 % bis 7,7 % des Gewichts des Fischfutters liegt.

2. Fischfutter **nach Anspruch 1,** wobei das Fischfutter Olivenkern mit einer Feuchtigkeit im Bereich von 2% bis 40%, vorzugsweise 6% bis 15%, beinhaltet.

3. Fischfutter **nach Anspruch 1 oder Anspruch 2,** wobei die einzige Substanz im Fischfutter, die aus Oliven stammt, der Olivenkern ist.

4. Fischfutter **nach einem der Ansprüche 1 bis 3,** wobei das Fischfutter die folgenden Fettsäuren beinhaltet: Caprylsäure, Palmitinsäure, Palmitoleinsäure, Stearinsäure, Linolsäure und Linolensäure.

5. Fischfutter **nach Anspruch** 4, wobei das Fischfutter die folgenden Säuren in Gramm pro 100 Gramm Fett beinhaltet:
• Caprylsäure: 0,05 Gramm bis 0,50 Gramm
• Palmitinsäure: 3 Gramm bis 23 Gramm
• Palmitoleinsäure: 0,20 Gramm bis 4 Gramm
• Stearinsäure: 2 Gramm bis 9 Gramm
• Linolsäure: 5 Gramm bis 20 Gramm
• Linolensäure: 0,02 Gramm bis 4 Gramm

6. Fischfutter **nach einem der Ansprüche 1 bis 5,** wobei das Fischfutter 7 ± 10% Gramm Olivenkern pro 100 Gramm Fischfutter oder 3,5 ± 10% Gramm Olivenkern pro 100 Gramm Fischfutter beinhaltet.

7. Verfahren zur Herstellung von Fischfutter, beinhaltend das Mischen von Olivenkern mit Pflanzen- und/oder Tiermehlen, wobei das Gewicht des Olivenkerns im Bereich von 3,1 Gramm bis 7,7 Gramm pro 100 Gramm Fischfutter liegt.

8. Verfahren zur Herstellung von Fischfutter **nach Anspruch 7,** wobei der Olivenkern aus der Verarbeitung von Oliventrester gewonnen wird und die folgenden Eigenschaften aufweist:
• Feuchtigkeit von 6 % bis 15 % bei 105 Grad Celsius,
• gesamte stickstoffhaltige Substanzen, d.h. Stickstoffmenge multipliziert mit 6,25, von 6 % bis 15 %,
• Gesamtfett nach Hydrolyse mit Salzsäure von 3 % bis 10%,
• Rohfasern von 30 % bis 70%,
• Gesamtasche von 3 % bis 8 %,
• Gesamtkalzium Ca von 100 Milligramm bis 700 Milligramm pro 100 Gramm Olivenkern,
• Gesamteisen Fe von 10 Milligramm bis 200 Milligramm pro 100 Gramm Olivenkern.

9. Verfahren zur Herstellung von Fischfutter **nach Anspruch 7 oder Anspruch 8,** wobei die maximale Temperatur während der Fischfutterherstellung 120 Grad Celsius (°C) beträgt.

10. Verfahren zur Herstellung von Fischfutter **nach einem der Ansprüche 7 bis 9,** wobei der Olivenkern das Fischfutter mit polaren Lipiden, vorzugsweise mit Ölsäure, Linolsäure, Linolensäure und Palmitoleinsäure, anreichert.

11. Verfahren zur Anreicherung von Fischen aus der Familie der Sparidea oder der Familie der Moronidae mit polaren Lipiden, die aus Olivenprodukten durch Fütterung der Fische mit Fischfutter erhalten werden, **dadurch gekennzeichnet, dass** das Fischfutter 3,1 Gramm bis 7,7 Gramm Olivenkern pro 100 Gramm Fischfutter enthält.

12. Verfahren zur Anreicherung von Fischen **nach Anspruch 11,** wobei das Verfahren i) den Besatz der Fische in Fischbesatzeinrichtungen mit einer Dichte im Bereich von 6,19 kg/m³ bis 11,77 kg/m³, ii) die Wassertemperatur in den Fischbesatzeinrichtungen zwischen 19°C und 24°C und iv) das Ernten der Fische beinhaltet, wenn die Dichte der Fische in den Fischbesatzeinrichtungen zwischen 11,5 kg/m³ und 20,8 kg/m³ liegt.

13. Verfahren zur Anreicherung von Fischen **nach Anspruch 11 oder nach Anspruch 12,** wobei die Fische zweimal täglich mit Fischfutter gefüttert werden und das Fischfutter, das den Fischen jeweils zur Verfügung gestellt wird, zwischen 0,65 % und 1,59 % des Gewichts der Fische, vorzugsweise zwischen 0,8 % und 1,16 % des Gewichts der Fische beträgt.

14. Verfahren zur Anreicherung von Fischen **nach einem der Ansprüche 11 bis 13,** wobei die Fische entweder Goldbrasse oder Wolfsbarsch sind und der Gehalt an Olivenkernen 7 ± 10% Gramm Olivenkern pro 100 Gramm Fischfutter beträgt, falls es sich bei dem Fisch um Goldbrasse handelt, und 3,5 ± 10% Gramm Olivenkern pro 100 Gramm Fischfutter, falls es sich bei dem Fisch um Wolfsbarsch handelt.

15. Verfahren zur Anreicherung von Fischen **nach einem der Ansprüche 11 bis 14,** wobei die Fütterung der Fische mit dem Fischfutter 40 bis 250 Tage dauert.

16. Verfahren zur Anreicherung von Fischen **nach Anspruch 15,** wobei die Fütterung der Fische mit dem Fischfutter 40 bis 190 Tage dauert, wenn der Fisch Goldbrasse ist, und 90 bis 250 Tage, wenn der Fisch Wolfsbarsch ist.

17. Verfahren zur Züchtung von Fischen aus der Familie der Sparidea oder der Familie der Moronidae, wobei das Verfahren eine erste Vorkulturphase und ein Anreicherungsverfahren beinhaltet und wobei das Anreicherungsverfahren **nach einem der vorstehenden Ansprüche 11 bis 16** erfolgt.

## Revendications

1. Aliment pour poisson pour espèces marines et d'eau douce enrichi avec des lipides polaires, l'aliment pour poisson comprenant des substances provenant d'olives **caractérisé en ce que** l'aliment pour poisson contient en outre du noyau d'olive, comprenant des lipides polaires à action anti-facteur d'activation plaquettaire et la teneur en poids du noyau d'olive dans l'aliment pour poisson étant dans une gamme de 3,1 % à 7,7 % du poids de l'aliment pour poisson.

2. Aliment pour poisson **selon la revendication 1,** dans lequel l'aliment pour poisson comprend du noyau d'olive ayant un taux d'humidité dans une gamme de 2 % à 40 %, de préférence de 6 % à 15 %.

3. Aliment pour poisson **selon l'une quelconque des revendications 1 ou 2,** dans lequel la seule substance dans l'aliment pour poisson, qui provient d'olives est ledit noyau d'olive.

4. Aliment pour poisson **selon l'une quelconque des revendications 1 à 3,** dans lequel l'aliment pour poisson comprend les acides gras suivants : acide caprylique, acide palmitique, acide palmitoléique, acide stéarique, acide linoléique et acide linolénique.

5. Aliment pour poisson **selon la revendication 4,** dans lequel l'aliment pour poisson comprend les acides suivants en grammes pour 100 grammes de graisse :
• acide caprylique : 0,05 grammes à 0,50 grammes
• acide palmitique : 3 grammes à 23 grammes
• acide palmitoléique : 0,20 grammes à 4 grammes
• acide stéarique : 2 grammes à 9 grammes
• acide linoléique : 5 grammes à 20 grammes
• acide linolénique : 0,02 grammes à 4 grammes.

6. Aliment pour poisson **selon l'une quelconque des revendications 1 à 5,** dans lequel l'aliment pour poisson comprend 7 ± 10% grammes de noyau d'olive pour 100 grammes d'aliment pour poisson ou 3,5 ± 10% grammes de noyau d'olive pour 100 grammes d'aliment pour poisson.

7. Procédé de production d'aliment pour poisson, comprenant le mélange de noyau d'olive avec des farines végétales et/ou animales, dans lequel le poids du noyau d'olive est dans une gamme de 3,1 grammes à 7,7 grammes pour 100 grammes d'aliment pour poisson.

8. Procédé de production d'aliment pour poisson **selon la revendication 7**, dans lequel le noyau d'olive est obtenu à partir du traitement de grignons d'olive et a les caractéristiques suivantes :
• humidité de 6 % à 15 % à 105 degrés Celsius,
• total des substances azotées, c'est-à-dire la quantité d'azote multipliée par 6,25, de 6 % à 15 %,
• graisse totale après hydrolyse à l'acide chlorhydrique de 3 % à 10%,
• fibres brutes de 30% à 70 %,
• cendres totales de 3 % à 8 %,
• calcium total de 100 mg à 700 mg pour 100 grammes de noyau d'olive,
• fer Fe total de 10mg à 200 mg pour 100 grammes de noyau d'olive.

9. Procédé de production d'aliment pour poisson **selon la revendication 7 ou revendication 8,** dans lequel la température maximale pendant la production d'aliment pour poisson est de 120 degrés Celsius (°C).

10. Procédé de production d'aliment pour poisson **selon l'une quelconque des revendications 7 à 9,** dans lequel le noyau d'olive enrichit l'aliment pour poisson avec des lipides polaires, de préférence avec de l'acide oléique, de l'acide linoléique, de l'acide linolénique et de l'acide palmitoléique.

11. Procédé d'enrichissement de poissons de la famille des Sparidea ou de la famille des Moronidae avec des lipides polaires obtenus à partir de produits oléicoles en nourrissant les poissons avec de l'aliment pour poisson, **caractérisée en ce que** l'aliment pour poisson contient 3,1 grammes à 7,7 grammes de noyau d'olive pour 100 grammes d'aliment pour poisson.

12. Procédé d'enrichissement de poissons **selon la revendication 11,** dans lequel le procédé comprend i) le stockage des poissons dans des moyens de stockage avec une densité allant de 6,19 kg/m³ à 11,77 kg/m³, ii) la température de l'eau dans les moyens de stockage est entre 19 °C et 24 °C et iv) les poissons sont récoltés lorsque la densité des poissons dans les moyens de stockage est entre 11,5 kg/m³ et 20,8 kg/m³.

13. Procédé d'enrichissement de poissons **selon la revendication 11 ou la revendication 12,** dans lequel les poissons sont nourris avec de l'aliment pour poisson deux fois par jour et l'aliment pour poisson qui est fourni chaque fois aux poissons est entre 0,65 % et 1,59 % du poids des poissons, de préférence entre 0,8 % et 1,16 % du poids des poissons.

14. Procédé d'enrichissement des poissons **selon l'une quelconque des revendications 11 à 13,** dans lequel les poissons sont soit de la dorade royale ou du bar, et la teneur en noyau d'olive est de 7 ± 10% grammes de noyau d'olive pour 100 grammes d'aliment pour poisson dans le cas où le poisson est de la dorade royale et 3,5 ± 10% de noyau d'olive pour 100 grammes d'aliment pour poisson dans le cas où le poisson est du bar.

15. Procédé d'enrichissement de poissons **selon l'une quelconque des revendications 11 à 14,** dans lequel l'alimentation des poissons avec ledit aliment pour poisson dure de 40 à 250 jours.

16. Procédé d'enrichissement de poissons **selon la revendication 15,** dans lequel l'alimentation du poisson avec ledit aliment pour poisson dure 40 à 190 jours dans le cas où le poisson est de la dorade royale et de 90 à 250 jours dans le cas où le poisson est du bar.

17. Procédé de culture de poissons de la famille des Sparidea ou de la famille des Moronidae, dans lequel le procédé comprend une phase initiale de pré-croissance et un procédé d'enrichissement, et dans lequel le procédé d'enrichissement est **selon l'une quelconque des revendications précédentes 11 à 16.**
